# EUROPEAN PATENT APPLICATION

(11) **EP 2 254 193 A1**
(43) Date of publication of application: **24.11.2010**
(21) Application number: 09722042.0
(22) Date of filing: 18.03.2009
(51) Int. Cl.: H01M 12/08, H01M 4/36

(54) **ELECTRODE AND BATTERY HAVING THE SAME**

(30) Priority: 19.03.2008 JP 2008071111
(71) Applicant: Sumitomo Chemical Company, Limited, Tokyo 104-8260 (JP)
(72) Inventor: NAKANE, Kenji, Tsukuba-shi Ibaraki 305-0045 (JP); HATTORI, Takeshi, Abiko-shi Chiba 270-1175 (JP); YAMAMOTO, Taketsugu, Tsukuba-shi Ibaraki 305-0045 (JP)
(74) Representative: Hart-Davis, Jason
(86) International application number: PCT/JP2009/056029
(87) International publication number: WO 2009/116688

(57) **Abstract**

Disclosed are an electrode and a battery comprising the electrode. The electrode comprises a nano composite comprising nano particles capable of being oxidized and reduced and a carbonaceous material covering the nano particles.

## Description

### TECHNICAL FIELD

The present invention relates to an electrode and a battery having the same.

### BACKGROUND ART

Electrodes are used for electrochemical devices such as various batteries, e.g., an air battery, a lithium ion secondary battery and a sodium ion secondary battery, and a capacitor. Typically, a battery has a positive electrode and a negative electrode. Particularly in an air battery, atmospheric oxygen is used as a positive electrode active material, so that there is no need to put a positive electrode active material into the device. By this, it is expected to achieve a battery having a high energy density.

As an air battery, for example, Japanese Patent Application Laid-open No. 50-28640 discloses an air secondary battery comprising an air electrode (positive electrode) and a zinc electrode (negative electrode) produced by electrodeposition of zinc onto a substrate such as a metal net.

### DISCLOSURE OF THE INVENTION

However, in the air secondary battery, it is not possible to say that generation of dendrites on the negative electrode when charged can be sufficiently suppressed, thereby still leaving room for improvements.

An object of the present invention is to provide an electrode that can suppress the generation of dendrites when used for an electrochemical device.

The present inventors have made various studies and found out that the following invention meets the object, thereby completing the present invention. The present invention provides the following.
<1> An electrode comprising a nano composite comprising nano particles capable of being oxidized and reduced and a carbonaceous material covering the nano particles.
<2> The electrode according to <1>, wherein the nano composite satisfies the following requirement (A):
   (A) the carbonaceous material in the nano composite is in the form of a layer.
<3> The electrode according to <2>, wherein the nano composite satisfies the following requirements (B), (C), and (D):
   (B) the number of layers formed of the carbonaceous material is from 2 to 1000,
   (C) the total thickness of the layers formed of the carbonaceous material is within a range from 1 nm to 200 nm,
   (D) the diameter of the nano particles is within a range from 0.5 nm to 900 nm.
<4> The electrode according to any one of <1> to <3> comprising the nano composite which is one obtained by a producing method comprising the following steps (1) and (2) in this order:
   (1) a step of polymerizing a carbonaceous material precursor in the presence of nano particles capable of being oxidized and reduced to form a carbonaceous material intermediate on the surface of the nano particles,
   (2) a step of carbonizing the carbonaceous material intermediate to form the carbonaceous material covering the nano particles to produce a nano composite.
<5> A battery comprising the electrode according to any one of <1> to <4>.
<6> An air battery comprising the electrode according to any one of <1> to <4>.
<7> An air battery comprising the electrode according to any one of <1> to <4> as a negative electrode and using atmospheric oxygen as a positive electrode active material.
<8> The air battery according to <7> capable of being charged and discharged.

### BRIEF DESCRIPTION OF THE DRAWINGS

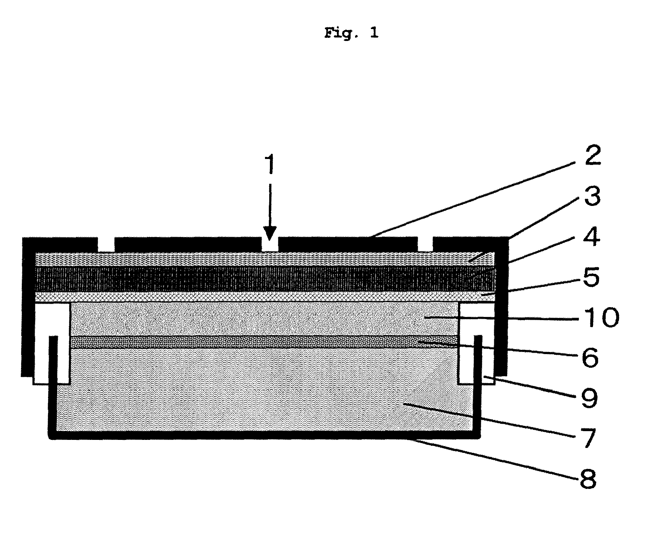

Fig. 1 is a schematic view illustrating one example of an air battery.

### DESCRIPTION OF SYMBOLS

- 1: air hole
- 2: upper lid
- 3: air diffusion layer
- 4: catalyst layer
- 5: collector
- 6: separator
- 7: negative electrode
- 8: lower lid
- 9: gasket
- 10: electrolytic solution

### MODES FOR CARRYING OUT THE INVENTION

The electrode of the present invention is characterized by comprising a nano composite comprising nano particles capable of being oxidized and reduced and a carbonaceous material covering the nano particles. The nano composite has a nano size (about 0.5 nm to 1 µm), and is preferably particulate. In the sense of being suitably used for an electrode, the nano composite preferably satisfies the following requirement (A), and more preferably further satisfies the following requirements (B), (C), and (D):
(A) the carbonaceous material in the nano composite is in the form of a layer,
(B) the number of layers formed of the carbonaceous material is from 2 to 1000,
(C) the total thickness of the layers formed of the carbonaceous material is within a range from 1 nm to 200 nm,
(D) the diameter of the nano particles is within a range from 0.5 nm to 900 nm. In the present specification, the diameter of the nano particles refers to the diameter thereof.

The nano composite can be obtained by a producing method comprising the following steps (1) and (2) in this order, and an electrode comprising a nano composite obtained by this is a preferable embodiment:
(1) a step of polymerizing a carbonaceous material precursor in the presence of nano particles capable of being oxidized and reduced to form a carbonaceous material intermediate on the surface of the nano particles,
(2) a step of carbonizing the carbonaceous material intermediate to form a carbonaceous material covering the nano particles to produce a nano composite.

A production of the nano composite will be specifically described below.

First, in step (1), the nano particles capable of being oxidized and reduced (hereafter also abbreviated as nano particles) are produced as follows. One or plural nano particle precursors and one or plural dispersants are used, and then the nano particle precursor and the dispersant are allowed to react or to bond with each other to form a precursor composite. Generally, the nano particle precursor and the dispersant are dissolved in a suitable solvent (the resultant obtained here is referred to as composite solution) or are dispersed in a suitable solvent (the resultant obtained here is referred to as composite suspension), and the nano particle precursor and the dispersant are bonded with each other to form this precursor composite.

The nano particle precursor is not limited in particular as long as it promotes the polymerization of a later-mentioned carbonaceous material precursor and/or carbonization of a carbonaceous material intermediate described below. Specific examples of a constituent element can include an alkali metal element such as lithium, sodium, and potassium, an alkali earth metal element such as calcium and magnesium, Group 4 element such as titanium and zirconium, Group 5 element such as vanadium and niobium, Group 6 element such as chromium, molybdenum, and tungsten, Group 11 element such as copper, silver, and gold, Group 12 element such as zinc and cadmium, Group 13 element such as aluminum, gallium, and indium, Group 14 element such as silicon, germanium, tin, and lead, and a transition metal element such as manganese, iron, cobalt, nickel, palladium, and platinum. Examples of the nano particle precursor can include an elemental metal composed of these elements, an alloy comprising two or more of these elements, a metal compound comprising one or more of these elements, and a mixture thereof. The nano particle precursor preferably comprises one or more kinds of elements consisting of manganese, iron, cobalt, and nickel, and more preferably comprises iron.

The precursor composite comprises one or plural dispersants. This dispersant is selected from among those that promote creation of nano particles having an intended stability, size, and homogeneity. The dispersants include various organic molecules, polymers, oligomers, and the like. This dispersant is used by being dissolved or dispersed in a suitable solvent.

As the solvent, it is possible to use various solvents including water and organic solvents. The solvent is used for interaction of the nano particle precursor and the dispersant. The solvent can work not only as a solvent but also as a dispersant. The solvent can turn the nano particle precursor into a suspension. Examples of a preferable solvent include water, methanol, ethanol, n-propanol, isopropyl alcohol, acetonitrile, acetone, tetrahydrofuran, ethylene glycol, dimethylformamide, dimethyl sulfoxide, and methylene chloride, and these may be used by being mixed.

The precursor composite can be regarded as a composite obtained from a nano particle precursor and a dispersant in which the composite is surrounded by solvent molecules. After the precursor composite has been produced in a composite solution or in a composite suspension, the solvent may be removed by drying or the like, whereby a dried precursor composite can be obtained. This dried precursor composite can be returned to a suspension by addition of a suitable solvent.

In the above, there is a feature such that the molar ratio of the dispersant and the nano particle precursor can be controlled in the composite solution or in the composite suspension. Preferably, the ratio of the nano particle atoms to the functional groups of the dispersant is about 0.01 : 1 to 100 : 1, and more preferably 0.05 : 1 to 50 : 1.

In the above, the dispersant can promote creation of the nano particles being extremely small and having a uniform particle size. Generally, in the presence of a dispersant, the nano particle precursor is formed to have a size of 1 µm or less, preferably 500 nm or less, more preferable 50 nm or less.

The composite solution or composite suspension may comprise an additive for promoting cremation of the nano particles. As the additive, for example, an inorganic acid or a basic compound can be added. The example of the inorganic acid includes hydrochloric acid, nitric acid, sulfuric acid, and phosphoric acid and the example of the inorganic basic compound includes sodium hydroxide, potassium hydroxide, calcium hydroxide, and ammonium hydroxide. A basic substance (for example, an aqueous solution of ammonia) may be added in order to adjust the pH value to 8 to 13. More preferably, the pH value is adjusted to 10 to 11. At a high pH value, the nano particle precursor is separated finely and affects the particle size of the nano particles.

A solid substance may be added in order to promote creation of the nano particles. For example, ion exchange resin can be added at the time of creating the nano particles. The solid substance can be removed by a simple operation from the final composite solution or composite suspension.

Typically, the composite solution or the composite suspension is mixed for 0.5 hours to 14 days to produce the nano particles. The mixing temperature is about 0°C to 200°C. The mixing temperature is a great factor that affects the particle size of the nano particles.

Typically, when iron is used as a nano particle precursor, it will become an iron compound such as iron chloride, iron nitrate, and iron sulfate, to yield nano particles by reacting or being bonded with a dispersant. These compounds are often dissolved into an aqueous solvent. By creation of nano particles using a metal salt, a byproduct is created. A typical byproduct is hydrogen gas when the nano particles are prepared by using metal. As a typical embodiment, the nano particles are activated in the mixing step or are further reduced by using hydrogen.

It is preferable that the nano particles be stably formed as a suspension of active nano particles. By stability of the nano particles, agglomeration of the particles with each other is suppressed. Even when a part of or all of the nano particles are settled out, the particles will be re-suspended easily by being mixed. The diameter of the created nano particles is usually within a range from 0.5 nm to 900 nm. In the sense of being suitably used for an electrode, the diameter is preferably within a range from 0.5 nm to 500 nm, more preferably within a range from 0.5 nm to 50 nm. Here, the nano particles are not limited to equiaxed particles including approximately spherical ones (having an aspect ratio of about 1) but include those having a long diameter and a short diameter such as a rod-shaped one, a cylindrical one, or a prismatic one. In the case that the nano particles have a long diameter and a short diameter, it is sufficient that at least the short diameter is within the aforementioned range. The nano particles are preferably equiaxed particles including approximately spherical ones.

The nano particles can be oxidized and reduced. Specifically, with respect to an electrode comprising the nano particles, when a voltage is externally applied in the presence of an electrolyte, the nano particles can be electrochemically oxidized and reduced. The electrode itself is electrochemically reduced when being charged, and the electrode in a reduced state is electrochemically oxidized when being discharged.

The nano particles obtained in the above can play a role as a catalyst that promotes polymerization of the carbonaceous material precursor and/or the carbonaceous material intermediate in step (1).

In step (1), the carbonaceous material precursor is preferably one that can disperse the nano particles. By dispersing the nano particles and polymerizing the carbonaceous material precursor in the presence thereof, a carbonaceous material intermediate is formed on the surface of the nano particles. An organic material suitable as a carbonaceous material precursor may be, for example, a benzene or a naphthalene derivative which have one or plural aromatic rings and have a functional group for polymerization in a molecule. Examples of the functional group for polymerization include COOH, C=O, OH, C=C, SO₃, NH₂, SOH, and N=C=O.

Examples of a preferable carbonaceous material precursor can include resorcinol, phenol resin, melanin-formaldehyde gel, polyfurfuryl alcohol, polyacrylonitrile, sugar, and petroleum pitch.

The nano particles are mixed with the carbonaceous material precursor so that the carbonaceous material precursor may be polymerized on the surface of the nano particles. In the case that the nano particles are catalytically active, the nano particles can play a role of starting and/or promoting the polymerization of the carbonaceous material precursor in the vicinity of the nano particles.

The amount of the nano particles relative to the carbonaceous material precursor may be set so that the carbonaceous material precursor may form the maximum amount of carbonaceous material intermediate homogeneously. The amount of the nano particles depends also on the kind of the carbonaceous material precursor to be used. As an example of the embodiments, the molar ratio of the carbonaceous material precursor and the nano particles is about 0.1 : 1 to 100 : 1, preferably 1 : 1 to 30 : 1. This molar ratio, and the kind and the diameter of the nano particles affect the thickness and the like of the carbonaceous material of the produced nano composite.

The mixture of the nano particles and the carbonaceous material precursor is sufficiently aged until the carbonaceous material intermediate is sufficiently formed on the surface of the nano particles. The time needed for forming the carbonaceous material intermediate depends on the temperature, the kind of the nano particles, the concentration of the nano particles, the pH of the solution, and the kind of the carbonaceous material precursor to be used.

By adding ammonia a for pH adjustment, the speed of polymerization can be increased, and the amount of crosslinking of the carbonaceous material precursors with each other can be increased to provide effective polymerization in some cases.

With regard to the carbonaceous material precursor polymerizable by heat, the polymerization proceeds typically according as the temperature rises. The temperature is preferably 0 to 200°C, more preferably 25°C to 120°C.

An optimum polymerization condition for resorcinol-formaldehyde gel (in the case of using iron particles and in the case that the suspension pH is 1 to 14) is 0 to 90°C, and the ageing time is 1 to 72 hours.

In step (2), the carbonaceous material intermediate is carbonized to form a carbonaceous material, whereby the nano composite is obtained. The carbonization is generally carried out by calcining. Typically, the calcination is carried out at a temperature of 500 to 2500°C, preferably 1000 to 2500°C. When being calcined, the oxygen atoms and the nitrogen atoms in the carbonaceous material intermediate are released, and rearrangement of the carbon atoms takes place to form a carbonaceous material. Preferably, the carbonaceous material has a graphite-like layer form (multiple layer form), and the total thickness of the layers is within a range from 1 to 200 nm, more preferably within a range from 1 to 20 nm. The number of layers can be controlled by the kind and the thickness of the carbonaceous material intermediate, and the calcination temperature.

For example, when the calcination temperature is raised, the speed of growing carbon will be large to increase the number of layers. When the thickness of the carbonaceous material intermediate is increased, the number of layers will increase. Also, when the aromatic concentration of the carbonaceous material intermediate (the amount of aromatic compounds in the carbonaceous material precursor) is increased, the number of layers will increase.

Also, the thickness of the carbonaceous material (thickness of the layers) in the nano composite can also be controlled by adjustment of the degree of progress of the polymerization of the carbonaceous material precursor and/or the carbonization of the carbonaceous material intermediate. A carbonaceous material is a material mainly constituted of carbon, and refers, for example, to a material in which the ratio of carbon in the carbonaceous material is 90 wt% or more.

The nano composite is specific in shape, size, and electric characteristics because the carbonaceous material covers a part of or all of the nano particles. A typical shape of the nano composite is particulate (particularly approximately spherical), or at least a part thereof is particulate. The shape and the particle size of the nano composite largely depend on the shape and the diameter of the nano particles that are used when producing thereof. Since a carbonaceous material is formed around the nano particles, the shape and the diameter of the nano particles are affected. The nano composite may be a structure in which the nano particles are covered in a bag form by the carbonaceous material, or a part of the structure, or may be an aggregate of these.

In the above-described nano composite, the shape thereof, the number of layers in the case that the carbonaceous material forms layers, the total thickness of the carbon layers, and the diameter of the nano particles can be measured by a transmission type electron microscope (TEM). Also, in the case that the carbonaceous material forms layers, the layers may be warped or bent along the surface of the nano particles.

The electrode of the present invention can be obtained by, using the above-described nano composite, allowing an electrode collector to carry an electrode agent obtained by mixing the composite with a binder and a solvent in accordance with the needs. Also, the electrode may be obtained by, using the nano composite as an electrical conductive material, allowing an electrode collector to carry an electrode agent obtained by mixing the composite with an electrode active material, a binder, and a solvent in accordance with the needs. The mixing can be carried out by a known method such as wet mixing.

Next, a battery comprising the electrode of the present invention will be described by taking, as an example, a case that the electrode is used as a negative electrode for an air battery. An air battery means a battery in which atmospheric oxygen is used as a positive electrode active material, and a metal is used as a negative electrode active material. Typically, a porous carbonaceous material, a porous metal material, or a composite material of the two which have a catalytic function is used in an air electrode for taking the atmospheric oxygen into the battery. Various metals are used for the negative electrode active material, and an aqueous solution such as an aqueous solution of potassium hydroxide is used for an electrolytic solution. At the time of discharging of the air battery, the atmospheric oxygen (O₂) is dissolved into the electrolytic solution as OH⁻ by a catalytic action of the air electrode, and reacts with the negative electrode active material to generate an electromotive force.

Fig. 1 is a schematic view of an air battery as one embodiment of the present invention. This air battery has a construction such that an air diffusion layer 3, a porous catalyst layer 4 having a catalytic function, an air electrode provided with a collector 5, a separator 6, a negative electrode 7 comprising a negative electrode active material, and a cell lower lid 8 are stacked onto a cell upper lid 2 provided with an air hole 1, and a gap between the cell upper lid 2 and the cell lower lid 8 is sealed with a gasket 9.

Examples of the separator 6 can include papers such as a kraft paper, a vinylon mixed paper, and a synthetic pulp mixed paper, cellophanes, polyolefin nonwoven cloths such as a polyethylene graft film, and a polypropylene melt blow nonwoven cloth, polyamide nonwoven cloths, and glass fiber nonwoven cloths.

The above-described nano composite is used for the negative electrode active material in the negative electrode 7. The negative electrode 7 is in contact with the electrolytic solution 10. The electrolytic solution 10 may be carried by the negative electrode 7, the separator 6, and the catalyst layer 4. Also, the negative electrode 7 may have an additive in accordance with the needs. As the catalyst layer 4, carbon carrying platinum or the like is preferably used. For example, this carbon may be used to mix and press with a binder such as polytetrafluoroethylene to yield a sheet that may be processed into a prescribed size. At this time, the catalyst layer 4 can also prevent leakage of the electrolytic solution. As the collector 5, a metal net made of stainless steel or the like is used. Also, the air diffusion layer 3 also plays a role of supplying the atmospheric oxygen (O₂) homogeneously into the whole catalyst layer.

Examples of the electrolytic solution 10 can include a water soluble electrolytic solution. Specific examples thereof can include an aqueous solution of an alkali metal hydroxide such as lithium hydroxide, potassium hydroxide, and sodium hydroxide, an aqueous solution of an alkali metal halide such as lithium chloride, potassium chloride, and sodium chloride, and an acidic aqueous solution such as hydrochloric acid, oxalic acid, and sulfuric acid. Also, a thickening agent may be added into the aqueous electrolytic solution to provide a gel type. Examples of the thickening agent can include carboxymethyl cellulose, methyl cellulose, and polyvinyl alcohol.

Net, as a buttery comprising an electrode of the present invention, a case will be described in which the electrode is used as an electrode (positive electrode, negative electrode) for a nonaqueous electrolyte secondary battery (lithium ion secondary battery, sodium ion secondary battery, or the like).

The nonaqueous electrolyte secondary battery can be produced by housing an electrode group obtained by stacking and winding a positive electrode, a separator, and a negative electrode into a battery can, and then impregnating with an electrolytic solution made of an organic solvent comprising an electrolyte.

Examples of the shape of the electrode group can include a shape in which the cross-section obtained by cutting the electrode group perpendicularly to the axis of the winding will be a circle, an ellipse, a rectangle, a rectangle with rounded corners, or the like. Also, examples of the shape of the battery can include a paper shape, a coin shape, a cylindrical shape, and a prismatic shape.

The positive electrode for a nonaqueous electrolyte secondary battery is produced by allowing a positive electrode collector to carry a positive electrode mixture comprising a positive electrode active material, an electrical conductive material, and a binder. As the electrical conductive material, a carbonaceous material can be used. Examples of the carbonaceous material can include graphite powder, carbon black, and acetylene black. Typically, the ratio of the electrical conductive material in the positive electrode mixture is from 1 wt% to 30 wt%. Here, the nano composite can be used as the electrical conductive material.

As for the binder, a thermoplastic resin is typically used. Specific examples thereof include polyvinylidene fluoride (which may hereafter be referred to as PVDF), polytetrafluoroethylene (which may hereafter be referred to as PTFE), ethylene tetrafluoride-propylene hexafluoride-vinylidene fluoride-based copolymer, propylene hexafluoride-vinylidene fluoride-based copolymer, and ethylene tetrafluoride-perfluorovinyl ether-based copolymer. These may be used either alone or by mixing two or more kinds. Other examples of the binder include a polysaccharide such as starch, methylcellulose, carboxymethyl cellulose, hydroxymethyl cellulose, hydroxyethyl cellulose, hydroxypropyl cellulose, carboxymethyl hydroxyethyl cellulose, and nitrocellulose as well as a derivative thereof. Also, examples of the binder can include inorganic fine particles, for example, colloidal silica.

As for the positive electrode collector, Al, Ni, stainless steel, or the like can be used. Al is preferable because of being easily processed into a thin film and being inexpensive. Examples of a method of allowing the positive electrode collector to carry a positive electrode mixture include a method of pressure-molding, and a method of forming a paste by using a solvent or the like, applying the paste onto a positive electrode collector, drying, and then pressing for solidification. A plurality of positive electrode active materials may be mixed in the positive electrode in accordance with the needs.

As for the positive electrode active material, in the case of using it for a positive electrode of a sodium ion secondary battery, it is sufficient to use a material capable of being doped and undoped with sodium ions and, in the case of using it for a positive electrode of a lithium ion secondary battery, it is sufficient to use a material capable of being doped and undoped with lithium ions.

The example of the material capable of being doped and undoped with sodium ions can include a compound represented by NaFeO₂, NaNiO₂, NaCoO₂, NaMnO₂, NaFe₁₋ₓM¹ₓO₂. NaNi₁₋ₓM¹ₓO₂, Naco₁₋ₓM¹ₓO₂, or NaMn₁₋ₓM¹ₓO₂ (M¹ is one or more kinds of elements selected from the group consisting of trivalent metals, and typically 0 ≤ x < 0.5). Among these, by using a Na-Fe-containing mixed oxide having a hexagonal crystal structure as a positive electrode active material, a high discharging voltage can be obtained, whereby a sodium ion secondary battery having a higher energy density can be obtained. More preferred is a mixed oxide that has a value of 2 or less as determined by dividing a spacing 2.20 Å peak intensity by a spacing 5.36 Å peak intensity in X-ray diffraction analysis of the mixed oxide. The mixed oxide is obtained by heating a metal compound mixture comprising a sodium compound and an iron compound in a temperature range of from 400°C to 900°C. Here, in a temperature range of less than 100°C during the rising of the temperature, it is preferable to heat by setting the atmosphere to be an inert atmosphere.

Examples of the material capable of being doped and undoped with lithium ions can include LiNiO₂, LiCoO₂, Li(Ni,Co)O₂, Li(Ni,Mn)O₂, Li(Ni,Co,Mn)O₂, LiMn₂O₄, and Li₂MnO₃. By using these as a positive electrode active material, a lithium ion secondary battery can be obtained.

A negative electrode for a nonaqueous electrolyte secondary battery is produced by allowing a negative electrode collector to carry a negative electrode mixture comprising a negative electrode active material, an electrical conductive material, and a binder. As for the negative electrode active material and/or the electrical conductive material, a carbonaceous material can be used. Examples of the carbonaceous material can include graphite powder, carbon black, and acetylene black. Typically, the ratio of the electrical conductive material in the negative electrode mixture is from 1 wt% to 30 wt%. Here, the nano composite can be used as the negative electrode active material and/or the electrical conductive material.

As for the negative electrode collector, Cu, Ni, stainless steel, or the like can be used. Cu is preferable because of hardly forming an alloy with lithium or sodium and being easily processed into a thin film. Examples of a method of allowing the negative electrode collector to carry a negative electrode mixture can include a method of pressure-molding, or a method of forming a paste by using a solvent or the like, applying the paste onto a negative electrode collector, drying, and then pressing for solidification.

Example of the electrical conductive material in a greater detail include an electrical conductive carbon such as graphite, carbon black, acetylene black, Ketchen black, and activated carbon; graphite based electrical conductive material such as natural graphite, thermally expanded graphite, scale-shaped graphite, and expanded graphite; carbon fiber such as vapor-deposited carbon fiber; metal fine particles or metal fiber made of aluminum, nickel, copper, silver, gold, platinum, and the like; an electrical conductive metal oxide such as ruthenium oxide and titanium oxide; and an electrical conductive polymer such as polyaniline, polypyrrol, polythiophene, polyacetylene, and polyacene. In view of improving the electroconductivity effectively by a small amount, carbon black, acetylene black, and Ketchen black are preferable.

Examples of the binder include a polymer of a fluorine compound such as fluorinated olefin, tetrafluoroethylene, trifluoroethylene, vinylidene fluoride, and hexafluoropropylene. Other examples of the binder include a polysaccharide such as starch, methyl cellulose, carboxymethyl cellulose, hydroxymethyl cellulose, hydroxyethyl cellulose, hydroxypropyl cellulose, carboxymethyl hydroxyethyl cellulose, and nitro cellulose as well as a derivative thereof. Also, examples of the binder can include inorganic fine particles, for example, colloidal silica. As the binder, plural kinds of the above may be used. A blending amount of the binder in the negative electrode is typically 0.5 to 30 parts by weight, preferably 2 to 30 parts by weight, relative to 100 parts by weight of the carbonaceous material.

As for the separator, a member that has a form such as a porous film, a nonwoven cloth, and a woven cloth, and is made of a material of a polyolefin resin such as polyethylene and polypropylene, fluororesin, and nitrogen-containing aromatic polymer can be used. The separator may be formed by using two or more of these materials, or may be a laminated separator formed by stacking two or more layers made of differing materials. In the case of stacking, the respective layers may have differing porosities. As for a laminated separator, a laminated separator in which a nitrogen-containing aromatic polymer layer and a polyethylene layer are stacked each other is preferable in view of heat resistance and performance of shutdown as a separator for a secondary battery. Examples of the separator can include a separator disclosed in, for example, Japanese Patent Application Nos. 2000-30686 and 10-324758. The thickness of the separator is preferably smaller as long as the mechanical strength can be maintained in view of raising the energy density of the battery and reducing the internal resistance, and is typically about 10 to 200 µm, preferably about 10 to 30 µm, more preferably about 10 to 20 µm.

Examples of the electrolyte in the electrolytic solution can include, in the case of a lithium ion secondary battery, a lithium salt such as LiClO₄, LiPF₆, LiBF₄, LiCF₃SO₃, LiN(SO₂CF₃)₂, LiN(C₂F₅SO₂)₂, and LiC(SO₂CF₃)₃ and, in the case of a sodium ion secondary battery, a sodium salt such as NaClO₄, NaPF₆, NaBF₄, NaCF₃SO₃, NaN (SO₂CF₃)₂, NaN(C₂FₛSO₂)₂, and NaC(SO₂CF₃)₃. Two or more kinds of these may be used as well.

As for the organic solvent in the electrolytic solution, the examples which can be used include carbonates such as propylene carbonate (PC), ethylene carbonate (EC), dimethyl carbonate (DMC), diethyl carbonate (DEC), ethyl methyl carbonate (EMC), 4-trifluoromethyl-1,3-dioxorane-2-one, 1,2-di(methoxycarbonyloxy)ethane, and vinylene carbonate (VC); ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acetonitrile and butyronitrile; amides,such as N,N-dimethylformamide and N,N-dimethylacetamide; carbamates such as 3-methyl-2-oxazolidone; sulfur-containing compounds such as sulfolane, dimethylsulfoxide, and 1,3-propanesultone; and those obtained by introducing a fluorine substituent into the above-described organic solvents. Typically, two or more kinds among these are mixed and used. Among these, a mixed solvent comprising carbonates is preferable, and a mixed solvent of cyclic carbonate and acyclic carbonate or cyclic carbonate and ethers is more preferable. As a mixed solvent of cyclic carbonate and acyclic carbonate, a mixed solvent comprising ethylene carbonate, dimethyl carbonate, and ethyl methyl carbonate is preferable in view of larger operation temperature range, being superior in load characteristics, and being hardly decomposable even when a graphite material such as natural graphite or artificial graphite is used as an active material of the negative electrode. In view of obtaining a particularly excellent safety improving effect, it is preferable to use an electrolytic solution comprising a salt comprising fluorine as an electrolyte and an organic solvent having a fluorine substituent. A mixed solvent comprising ethers having a fluorine substituent such as pentafluoropropyl methyl ether and 2,2,3,3-tetrafluoropropyl difluoromethyl ether and dimethyl carbonate is superior in large electric current discharging characteristics, hence further more preferable.

A solid electrolyte may be used instead of the above-described electrolytic solution. As for the solid electrolyte, the which can be include a polymer electrolyte such as a polyethylene oxide-based polymer or a polymer comprising at least one or more kinds of polyorganosiloxane chain or polyoxyalkylene chain. A so-called gel-type electrolyte in which a polymer is allowed to hold a nonaqueous electrolyte solution can be used as well. Also, when a sulfide electrolyte such as Li₂S-SiS₂, Li₂S-GeS₂, Li₂S-P₂S₅, and Li₂S-B₂S₃ or an inorganic compound electrolyte comprising sulfide such as Li₂S-SiS₂-Li₃PO₄, and Li₂S-SiS₂-Li₂SO₄ is used, the safety can be further enhanced in some cases.

In the above description, examples of an electrode for an air battery and an electrode for a nonaqueous electrolyte secondary battery represented by a lithium ion secondary battery or a sodium ion secondary battery are shown as the electrode comprising a nano composite. Other examples of an electrode, which can also be used, include an electrode for an aqueous electrolyte secondary battery such as a nickel-cadmium secondary battery and a nickel-hydride secondary battery, and an electrode for a capacitor. These electrodes may be produced by using a known technique. More specifically, an electrode for an aqueous electrolyte secondary battery can be produced by using a technique disclosed, for example, in Japanese Patent Application Nos. 08-315810 and 2004-014427, and an electrode for a capacitor can be produced by using a technique disclosed, for example, in Japanese Patent Application No. 2000-106327.

### EXAMPLES

Next, the present invention will be described in a further greater detail by way of Examples.

### Example 1

### (1) Production of nano composite

An iron mixture liquid of 0.1M was prepared with 2.24 g of iron powder, 7.70 g of citric acid, and 400 ml of water, charged into a closed container, and mixed for 7 days in a table-top shaker to create nano particles. Hydrogen gas appropriately generated during the mixing period was discharged from the container to yield a nano particle suspension. Into a mixed solution of 6.10 g of resorcinol and 9.0 g of formaldehyde, 100 ml of the nano particle suspension was added, and 30 ml of an aqueous solution of ammonia was dropwise added while performing violent agitation. The pH value of the obtained suspension was 10.26. The suspension was heated to 80 to 90°C on an oil bath and aged for 3.5 hours to form a carbonaceous material intermediate. The carbonaceous material intermediate was recovered by filtration and, after being dried overnight in an oven, calcined at 1150°C for 3 hours in a nitrogen atmosphere to yield a nano composite. The diameter of the nano particles in the nano composite was 30 nm; the number of layers of the carbonaceous material was 60 layers; and the total thickness of the layers was 20 nm. The diameter of the nano particles and the number of layers and the total thickness of the carbonaceous material were determined by dispersing the nano composite in ethanol with use of supersonic wave, dropwise letting a suitable amount fall onto a Cu slit mesh, drying to prepare a sample, and thereafter observing the sample under a condition of an acceleration voltage of 200 kV by using a transmission type electron microscope (trade name: JEM2200FS manufactured by Nippon Denshi Co., Ltd.).

### (2) Fabrication of air battery

A mixture was prepared by mixing 0.3629 g of the nano composite obtained in (1) above and 1.2378 g of a 30% aqueous solution of KOH. Then, 0.3239 g of this mixture was collected and set on a lower lid 8 of a coil cell and used as a negative electrode 7. A filtration paper (No. 5C manufactured by Toyo Filtration Paper Co., Ltd.) was used as a separator 6, and a 30% aqueous solution of KOH was used as an electrolytic solution 10. Also, as a catalyst layer 4, 0.0988 g of platinum-carrying carbon powder (SA50BK manufactured by N·Echemcat Co., Ltd.) and 0.0060 g of a binder (F-201 manufactured by Daikin Co., Ltd.) were mixed in an agate mortar, and pressure-rolled into a sheet and stamped out into a size of 19 mmφ and used. A membrane filter (GVHP04700 manufactured by Millipore Co., Ltd.) was used as an air diffusion layer 3, and a metal net made of stainless steel (100 mesh manufactured by Nirako Co., Ltd.) was used as a collector 5. The air diffusion layer 3, the catalyst layer 4, and the collector 5 were stacked in this order, press-bonded by using a monoaxial press and set; an upper lid 2 was superposed; and then the resultant was sealed by a gasket 9 made of polypropylene to yield an air battery.

### (3) Charging and discharging test

The obtained air battery was charged under the following condition.

Charging condition: the battery was subjected to CC (Constant Current: constant electric current) charging at 0.056 mA/cm² from the rest potential to 1.1 V. The charging capacity at the first cycle was 32 mAh/g.

At the charging time, generation of dendrites on the negative electrode was not confirmed. Also, by performing discharging under the following condition on the charged battery, it can be found that this air battery is a battery that can be charged and discharged.

Discharging condition: the battery is subjected to CC (Constant Current: constant electric current) discharging at 0.056 mA/cm².

By repeating the charging and discharging, the cycle characteristics of the discharging capacity can be confirmed. This air battery can be charged and discharged, and is superior in the cycle characteristics of the discharging capacity and in the large current discharging characteristics.

### INDUSTRIAL APPLICABILITY

According to the present invention, provided is an electrode that can suppress the generation of dendrites when used in an electrochemical device. Moreover, the electrode of the present invention can enhance the cycle characteristics of the discharging capacity when used in a battery that can be charged and discharged, and in particular, can be used in an air secondary battery or the like. Also, the electrode can be used in electrochemical devices such as various batteries, e.g., a lithium ion secondary battery and a sodium ion secondary battery, and a capacitor.

## Claims

1. An electrode comprising a nano composite comprising nano particles capable of being oxidized and reduced and a carbonaceous material covering the nano particles.

2. The electrode according to claim 1, wherein the nano composite satisfies the following requirement (A):
(A) the carbonaceous material in the nano composite is in the form of a layer.

3. The electrode according to claim 2, wherein the nano composite satisfies the following requirements (B), (C), and (D):
(B) the number of layers formed of the carbonaceous material is from 2 to 1000,
(C) the total thickness of the layers formed of the carbonaceous material is within a range from 1 nm to 200 nm, and
(D) the diameter of the nano particles is within a range from 0.5 nm to 900 nm.

4. The electrode according to any one of claims 1 to 3 comprising the nano composite which is one obtained by a producing method comprising the following steps (1) and (2) in this order:
(1) a step of polymerizing a carbonaceous material precursor in the presence of nano particles capable of being oxidized and reduced to form a carbonaceous material intermediate on the surface of the nano particles,
(2) a step of carbonizing the carbonaceous material intermediate to form a carbonaceous material covering the nano particles to produce a nano composite.

5. A battery comprising the electrode according to any one of claims 1 to 4.

6. An air battery comprising the electrode according to any one of claims 1 to 4.

7. An air battery comprising the electrode according to any one of claims 1 to 4 as a negative electrode and using atmospheric oxygen as a positive electrode active material.

8. The air battery according to claim 7 capable of being charged and discharged.
